# EUROPÄISCHE PATENTANMELDUNG

(11) **EP 1 862 748 A2**
(43) Veröffentlichungstag der Anmeldung: **05.12.2007**
(21) Anmeldenummer: 07010582.0
(22) Anmeldetag: 29.05.2007
(51) Int. Cl.: F24J 2/52, H01L 31/042, H01L 31/048

(54) **Längenvariable Vorrichtung zum Tragen eines oder mehrerer Solarpaneele**

(30) Priorität: 02.06.2006 DE 102006026297
(71) Anmelder: Sandkötter, Michael, 48429 Rheine (DE); Datko, Martin, 48429 Rheine (DE)
(72) Erfinder: Sandkötter, Michael, 48429 Rheine (DE); Datko, Martin, 48429 Rheine (DE)
(74) Vertreter: Behrendt, Arne

(57) **Zusammenfassung**

Die vorliegende Erfindung betrifft eine Vorrichtung (1) zum Tragen eines oder mehrerer Solarpaneele und/oder Wärmekollektoren, beispielsweise zur Installation auf einem Flachdach, mit einer ersten Bodenwand (3a), mit einer ersten Rückwand (4a), welche sich von der ersten Bodenwand (3a) nach oben erstreckt und einstückig mit der ersten Bodenwand (3a) verbunden ist, mit einer ersten Seitenwand (6a), welche mit den lateralen Kanten (5) der ersten Bodenwand (3a) und der ersten Rückwand (4a) einstückig verbunden ist, wobei die erste Seitenwand (6a) von der Oberkante (7a) der ersten Rückwand (4a) nach unten zu der Vorderkante (8) der Vorrichtung schräg abfällt und mit einer zweiten Seitenwand (6b), die gegenüber der ersten Seitenwand (6a) angeordnet ist. Der Erfindung liegt die Aufgabe zugrunde, eine Vorrichtung anzugeben, die eine bessere Ausnutzung des Aufstellungsorts ermöglicht. Dies gelingt durch eine zweiteilige Vorrichtung mit einer zweiten Bodenwand (3b), einer zweiten Rückwand (4b), welche sich von der zweiten Bodenwand (3b) nach oben erstreckt und einstückig mit der zweiten Bodenwand (3b) verbunden ist, wobei die zweite Seitenwand (6b) von der Oberkante (7b) der zweiten Rückwand (4b) nach unten zur Vorderkante (8) der Vorrichtung (1) schräg abfällt und wobei die erste (3a) und die zweite Bodenwand (3b) sowie die erste (4a) und die zweite Rückwand (4b) sich in einem überlappungsbereich (2) mit einem variablen Überlappungsgrad überlappen. Der Abstand der gegenüberliegenden Seitenwände (6a, 6b) ist durch Variation des Überlappungsgrades einstellbar. Dadurch wird eine bessere Raumausnutzung erreicht,

## Beschreibung

Die vorliegende Erfindung betrifft eine Vorrichtung zum Tragen eines oder mehrerer Solarpaneele und/oder Wärmekollektoren, beispielsweise zur Installation auf einem Flachdach, mit einer ersten Bodenwand, mit einer ersten Rückwand, welche sich von der ersten Bodenwand nach oben erstreckt und einstückig mit der ersten Bodenwand verbunden ist, mit einer ersten Seitenwand, welche mit den lateralen Kanten der ersten Bodenwand und der ersten Rückwand einstückig verbunden ist, wobei die erste Seitenwand von der Oberkante der ersten Rückwand nach unten zu der Vorderkante der Vorrichtung schräg abfällt, und mit einer zweiten Seitenwand, die gegenüber der ersten Seitenwand angeordnet ist.

Bekannt ist eine derartige Vorrichtung aus dem europäischen Patent EP 0 857 926 B1.

Unter den Begriffen "Solarpaneele" bzw. "Wärmekollektoren" ist im Sinne der vorliegenden Erfindung ein im Wesentlichen flächiges, tafelartiges Objekt zu verstehen, das dazu dient, Sonnenenergie nutzbar zu machen. Dies können beispielsweise Solar-Module einer Photovoltaikanlage sein, welche die Sonnenenergie in elektrische Energie umsetzen. Alternativ sind wasserführende Wärmekollektoren gemeint, welche die Sonnenwärme zwecks Erhitzung des Wassers sammeln. Da sich die vorliegende Erfindung ausschließlich mit der mechanischen Befestigung von Solarpaneele oder Wärmekollektoren beschäftigt, kommt es auf die Art und Weise der Nutzung der Sonnenenergie nicht an.

Die Wirtschaftlichkeit einer Photovoltaikanlage ist im Wesentlichen abhängig von ihren Investitionskosten, da in der Regel keine Wartungskosten anfallen. Ein großer Anteil der Investitionskosten wird durch die Solar-Module selbst verursacht, ein nicht unwesentlicher Anteil nehmen die bei der Montage entstehenden Handwerkerkosten ein.

Aus der eingangs genannten Patentschrift ist eine wannenartige Vorrichtung zum Tragen eines oder mehrerer Solarpaneele bekannt, die insbesondere zur Installation auf einem Flachdach Verwendung findet. Die monolithische Kunststoff-Wanne besteht aus einer Rückwand, die sich aus einer Bodenwand nach oben erstreckt und aus zwei Seitenwänden, die jeweils mit den lateralen Kanten der Bodenwand und der Rückwand einstückig verbunden sind. Bei der Montage der Solarenergieanlage wird die einstückige Wanne das Flachdach gelegt und mit einer Füllung aus Steinen oder Sand beschwert. Die Solarpaneele wird unmittelbar auf den Rand der Kunststoff-Vorrichtung aufgeschraubt. Der Ausrichtungswinkel der montierten Solarpaneele wird durch die Neigung der abfallenden Seitenwand bestimmt. Die bekannte Vorrichtung erlaubt zwei unterschiedliche Einfallswinkel, je nachdem, ob die Vorrichtung auf der Bodenwand aufliegt oder umgedreht montiert wird.

Vorteil der bekannten Vorrichtung ist ihre gewichts- und kostengünstige Konstruktion. Die wannenartige Vorrichtung ist stapelbar und kann daher platzsparend gelagert und transportiert werden. Bei der Montage der Solarpaneele müssen diese lediglich mit der Vorrichtung verschraubt werden, nachdem die Vorrichtungen an dem Installationsort aufgestellt und beschwert worden sind. Die bekannte Vorrichtung erlaubt daher eine rasche Montage, sodass Handwerkerkosten eingespart werden.

Nachteil der bekannten Vorrichtung ist jedoch, dass sie nicht auf unterschiedlich große Solarmodule anpassbar ist. Aus diesem Grund ist für jede Größe der Solarmodule eine eigene Vorrichtung zum Tragen erforderlich, deren Maße an die Abmessungen des Solarmoduls angepasst ist. Es ist zwar grundsätzlich möglich, dass auf der vorbekannten Vorrichtung kleinere Solarmodule montiert werden, dies ist aber unwirtschaftlich, da hierdurch Platz am Aufstellungsort verschwendet wird. Für eine wirtschaftliche Nutzung der Sonnenenergie kommt es indes darauf an, dass der Raum am Aufstellungsort möglichst dicht mit Solarpaneele besetzt wird.

Ein weiterer Nachteil des vorbekannten Standes der Technik ist, dass die wannenartigen Vorrichtungen individuell auf dem Flachdach gen Süden ausgerichtet werden müssen, was einen zusätzlichen Zeitaufwand bedeutet. Darüber hinaus kann es vorkommen, dass sich einzelne Solarpaneele durch ungünstige Windverhältnisse auf dem Dach verschieben, sofern diese nicht ausreichend beschwert sind.

Ausgehend von dem genannten Stand der Technik liegt der Erfindung die Aufgabe zugrunde, eine Vorrichtung zum Tragen eines oder mehrerer Solarpaneele und/oder Wärmekollektoren anzugeben, die eine bessere Raumausnutzung ermöglicht und eine höhere Stabilität aufweist.

Gelöst wird dieses Problem dadurch, dass die Vorrichtung zweiteilig ausgeführt wird. Die Länge der aus zwei Teilen bestehenden Vorrichtung ist durch Variation des Überlappungsgrades der sich überlappenden Teile einstellbar. Dementsprechend umfasst die erfindungsgemäße Vorrichtung eine zweite Bodenwand und eine zweite Rückwand, die sich aus der zweiten Bodenwand nach oben erstreckt und einstückig mit der zweiten Bodenwand verbunden ist. Dementsprechend ist die zweite Seitenwand ist nicht an der ersten Boden- und Rückwand, sondern an den lateralen Kanten der zweiten Boden- und Rückwand anzuordnen.

Der Wesentliche Vorteil der erfindungsgemäßen Vorrichtung gegenüber dem aus der EP 0 857 926 B1 bekannten Stand der Technik besteht darin, dass der Abstand der gegenüberliegenden Seitenwände durch Variation des Überlappungsgrades prinzipiell stufenlos einstellbar ist. Es ist somit problemlos möglich, die Länge der Vorrichtung auf die Länge der Solarpaneele anzupassen. Hierdurch wird eine deutlich bessere Ausnutzung des Aufstellungsraums erzielt. Am ausgewiesenen Installationsort kann daher eine größere Fläche von Solarpaneele verbaut werden.

Um die Verwindungssteifigkeit der zweiteiligen Vorrichtung zu steigern, wird vorgeschlagen, im Überlappungsbereich eine Querstrebe anzuordnen, welche die Oberkante mindestens einer der Rückwände mit der Vorderkante der Vorrichtung verbindet.

Die Verwindungssteifigkeit kann weiter gesteigert werden mit Hilfe von Längsstreben, die an den Oberkanten der Rückwände sowie an der Vorderkante der Vorrichtung lösbar angeordnet sind. Die Längsstreben versteifen zum einen die zweiteilige Vorrichtung und erlauben es des Weiteren, eine Mehrzahl von zweiteiligen Vorrichtungen zu überbrücken, so dass ein in sich geschlossener Verband entsteht. Damit wird sicher ausgeschlossen, dass einzelne Vorrichtungen ihre Winkellage auf dem Dach verändern. Darüber hinaus kann der gesamte Verband gen Süden ausgerichtet werden, was gegenüber einer individuellen Ausrichtung einzelner Vorrichtungen eine Zeitersparnis darstellt.

Es ist empfehlenswert, die Solarpaneele und/oder Wärmekollektoren unmittelbar auf den Längsstreben zu befestigen. So ist es möglich Solarpaneele zu montieren, die länger sind als die jeweiligen Tragvorrichtungen. Die Raumausnutzung wird dadurch gesteigert.

Die vorliegende Erfindung soll nun anhand von Zeichnungen eines Ausführungsbeispiels näher erläutert werden. Hierfür zeigen:
- Fig. 1:: Vorrichtung in Explosionsdarstellung;
- Fig. 2:: Vorrichtung montiert;
- Fig. 3:: Verband aus mehreren Vorrichtungen in Explosionsdarstellung.

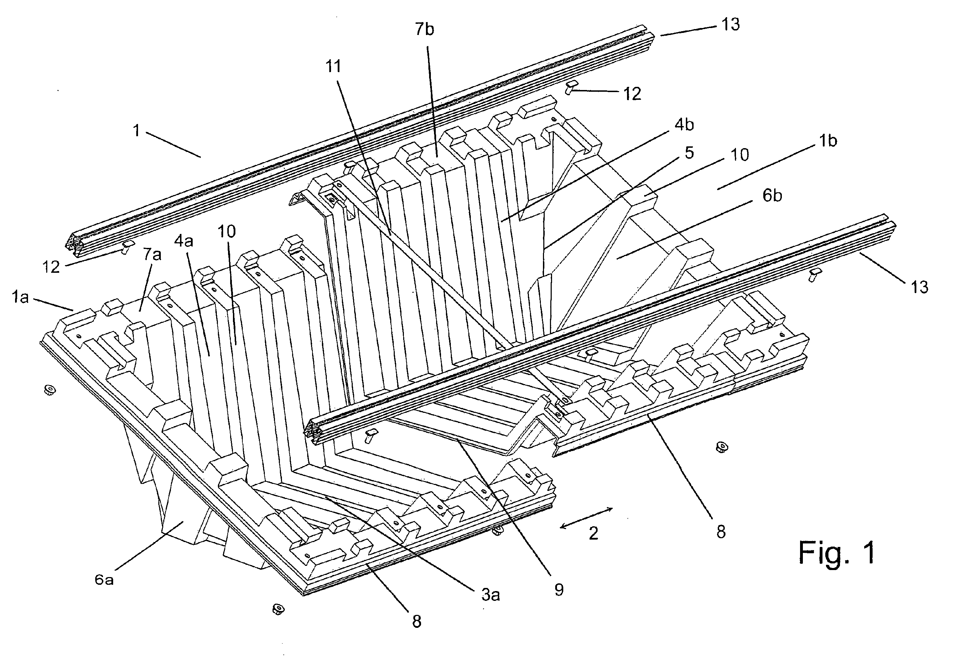

Ein Ausführungsbeispiel der erfindungsgemäßen Vorrichtung 1 zeigt Figur 1 in Explosionsdarstellung. Die Vorrichtung 1 besteht aus zwei Halbschalen 1a, 1b aus Kunststoff, die sich in einem Überlappungsbereich 2 überlappen. Jede Halbschale 1a, 1 b umfasst jeweils eine Bodenwand 3a, 3b, die jeweils einstückig mit einer Rückenwand 4a, 4b verbunden ist. Die Rückenwände 4a, 4b erstrecken sich von ihrer jeweiligen Bodenwand 3a, 3b aus nach oben. An ihren lateralen Kanten 5 sind die Rücken- und Bodenwände jeweils mit einer Seitenwand 6a, 6b einstückig verbunden. Beide Seitenwände 6a, 6b fallen schräg von der Oberkante 7a, 7b der jeweiligen Rückwand 4a, 4b nach unten zu der Vorderkante 8 der Vorrichtung 1 ab.

Mit ihren medialen Kanten 9 überlappen sich die Halbschalen 1a, 1b, so dass der Überlappungsbereich 2 entsteht. Der Überlappungsgrad ist variabel einstellbar, so dass der Abstand der beiden Seitenwände 6a, 6b durch Variation des Überlappungsgrades einstellbar ist. Die Hartschalen 1a, 1b weisen eine Mehrzahl von hohlen Rippen 10 auf, welche die gesamte Struktur versteifen. Bei der Variation der Längen der Vorrichtung 1 geben die Rippen 10 ein Stufenraster vor, so dass die Länge nicht stufenlos einstellbar ist. Die Rippen 10 müssen jeweils aufeinander angeordnet werden.

Im Überlappungsbereich 2 wird die Vorrichtung 1 mit Hilfe einer Querstrebe 11 verstärkt, die sich von der Vorderkante der Vorrichtung 8 zu den Oberkanten 7a, 7b der Rückwände 4a, 4b hin erstreckt. Hierdurch erhält die Vorrichtung 1 die notwendige Steifigkeit. Die Querstrebe 11 wird mit Hilfe von Schrauben 12 an den sich überlappenden Halbschalen 1a, 1 b befestigt.

Die Vorrichtung 1 wird weiter verstärkt mit Hilfe von zwei Längsstreben 13, die auf den Oberkanten 7a, 7b der Rückwände 4a, 4b, bzw. auf der Vorderkante 8 der Vorrichtung 1 mit Hilfe von Schrauben 12 befestigt wird. Die Längsstreben 13 weisen die Gestalt eines doppelten Nut-Profils auf, in denen die Köpfe der Schrauben 12 wie Nutensteine gleiten.

Auch die nicht dargestellten Solarpaneele und/oder Wärmekollektoren werden auf den Längsstreben 13 aufgeschraubt. Das Nut-Profil erlaubt es, die Wärmekollektoren stufenlos entlang der Längsstreben 13 zu verschieben und dadurch eine hohe Raumausnutzung zu erzielen.

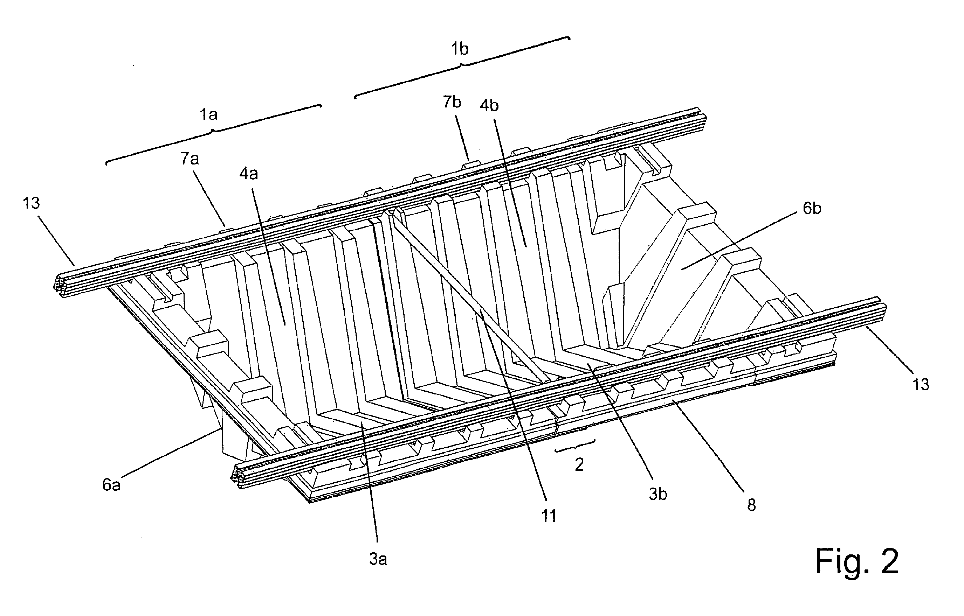

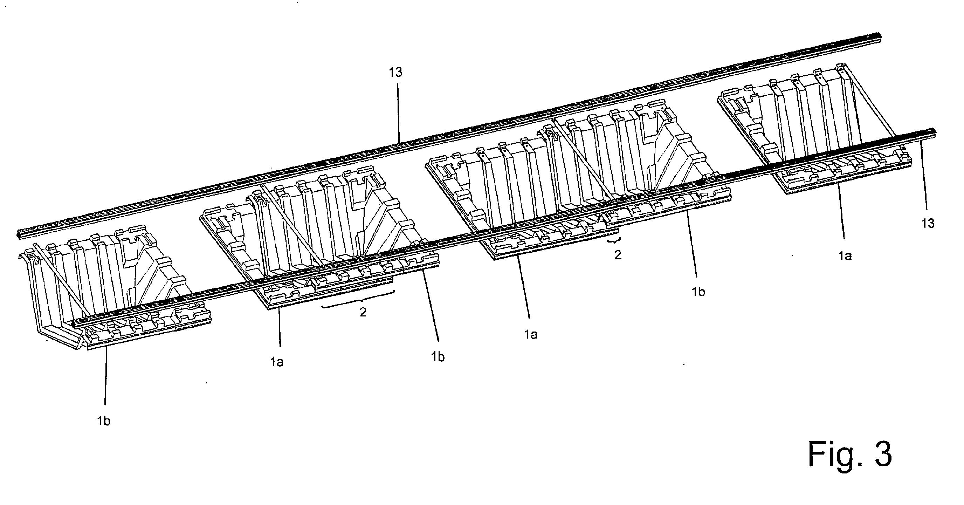

Wie in Figur 2 dargestellt, ragen die Längsstreben 13 über die Vorrichtung 1 heraus. Dies ermöglicht es zum einen, Solarpaneele zu installieren, welche länger sind als die Vorrichtung selbst. Darüber hinaus kann - wie in Figur 3 dargestellt - ein Verband aus mehreren Halbschalen 1a, 1 b gebildet werden, der eine hohe Stabilität aufweist und zugleich die bestmögliche Raumausnutzung bietet.

## Patentansprüche

1. Vorrichtung (1) zum Tragen eines oder mehrerer Solarpaneele und/oder Wärmekollektoren, beispielsweise zur Installation auf einem Flachdach,
a) mit einer ersten Bodenwand (3a),
b) mit einer ersten Rückwand (4a), welche sich von der ersten Bodenwand (3a) nach oben erstreckt und einstückig mit der ersten Bodenwand (3a) verbunden ist,
c) mit einer ersten Seitenwand (6a), welche mit den lateralen Kanten (5) der ersten Bodenwand (3a) und der ersten Rückwand (4a) einstückig verbunden ist,
d) wobei die erste Seitenwand (6a) von der Oberkante (7a) der ersten Rückwand (4a) nach unten zu der Vorderkante (8) der Vorrichtung (1) schräg abfällt,
e) und mit einer zweiten Seitenwand (6b), die gegenüber der ersten Seitenwand (6a) angeordnet ist,
**gekennzeichnet durch**
f) eine zweite Bodenwand (3b),
g) und **durch** eine zweite Rückwand (4b), welche sich von der zweiten Bodenwand (3b) nach oben erstreckt und einstückig mit der zweiten Bodenwand (3b) verbunden ist,
h) wobei die zweite Seitenwand (6b) mit den lateralen Kanten (5) der zweiten Bodenwand (3b) und der zweiten Rückwand (4b) einstückig verbunden ist,
i) wobei die zweite Seitenwand (6b) von der Oberkante der zweiten Rückwand (7b) nach unten zu der Vorderkante (8) der Vorrichtung (1) schräg abfällt,
j) und wobei die erste (3a) und die zweite Bodenwand (3b) sowie die erste (4a) und die zweite Rückwand (4b) sich in einem Überlappungsbereich (2) mit einem variablen Überlappungsgrad überlappen,
k) dergestalt, dass der Abstand der gegenüberliegenden Seitenwände (6a, 6b) **durch** Variation des Überlappungsgrades einstellbar ist.

2. Vorrichtung nach Anspruch 1, **gekennzeichnet durch** mindestens eine Querstrebe (11), die im Überlappungsbereich (2) die Oberkante (7a bzw. 7b) mindestens einer der Rückwände (4a bzw. 4b) mit der Vorderkante (8) der Vorrichtung (1) verbindet.

3. Vorrichtung nach Anspruch 1 oder 2, **dadurch gekennzeichnet, dass** Längsstreben (13) an den Oberkanten (7a, 7b) der Rückwände (4a, 4b) sowie an der Vorderkante (8) der Vorrichtung (1) lösbar befestigt sind.

4. Vorrichtung nach Anspruch 3, **dadurch gekennzeichnet, dass** die Solarpaneele und/oder Wärmekollektoren auf den Längsstreben (2) befestigt sind.

5. Verband aus mehreren Vorrichtungen (1) nach Anspruch 3 oder 4, **dadurch gekennzeichnet, dass** die Vorrichtungen (1) über die Längsstreben (2) miteinander verbunden sind.
